(19) Europäisches Patentamt
European Patent Office
Office européen des brevets

(11) Veröffentlichungsnummer: **0 002 809**
**B1**

(12) **EUROPÄISCHE PATENTSCHRIFT**

(45) Veröffentlichungstag der Patentschrift: **14.10.81**

(21) Anmeldenummer: **78101803.1**

(22) Anmeldetag: **21.12.78**

(51) Int. Cl.³: **C 08 F 214/26**
//(C08F214/26, 214/22, 214/28, 216/14)

# (54) Thermoplastisches Fluorpolymerisat.

(30) Priorität: **27.12.77 BE 862343**

(43) Veröffentlichungstag der Anmeldung:
**11.07.79 Patentblatt 79/14**

(45) Bekanntmachung des Hinweises auf die Patenterteilung:
**14.10.81 Patentblatt 81/41**

(84) Benannte Vertragsstaaten:
**DE FR GB IT NL**

(56) Entgegenhaltungen:
**FR - A - 2 312 515**
**FR - A - 2 320 317**
**FR - A - 2 347 389**
**US - A - 4 029 868**

(73) Patentinhaber: **HOECHST AKTIENGESELLSCHAFT**
**Postfach 80 03 20**
**D-6230 Frankfurt/Main 80 (DE)**

(72) Erfinder: **Hartwimmer, Robert, Dr.**
**Della-Croce-Strasse 10a**
**D-8263 Burghausen/Salzach (DE)**

**EP 0 002 809 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Courier Press, Leamington Spa, England.

Thermoplastisches Fluorpolymerisat

Die Erfindung betrifft ein thermoplastisches Copolymeres, bestehend aus Einheiten von Vinylidenfluorid, Hexafluorpropen, Tetrafluoräthylen sowie eines perfluorierten Äthers.

Copolymeriste des Vinylidenfluorids mit Hexafluorpropen [Ind. Eng. Chem. *49* (1954) Seite 1687 ff.] und auch Terpolymerisate von Vinylidenfluorid, Hexafluorpropen und relativ geringen Anteilen (<35 Gew.-%) von Tetrafluoräthylen (US—PS 2 968 649) sind seit langem bekannt. Derartige Copolymerisate besitzen elastomere Eigenschaften und sind vulkanisierbar. Es wurden auch bereits Quaterpolymerisate hergestellt (DE—OS 24 57 102), die neben Vinylidenfluorid, Hexafluorpropen, geringen Anteilen von Tetrafluoräthylen (<15 Gew.-%) noch etwa 17 bis 30 Gew.-% eines Perfluor(alkylvinyl)äthers enthalten. Auch diese Quaterpolymerisate sind Elastomere, sie besitzen jedoch eine erhöhte Flexibilität bei niedrigen Temperaturen. Durch Erhöhung der Menge an Tetrafluoräthylen im obengenannten Terpolymerisat auf Kosten insbesondere des Anteils von Vinylidenfluorid gelingt es, den Bereich elastomerer Eigenschaften, also den Bereich der löslichen und relativ niedrig schmelzenden Polymerisate, in Richtung thermoplastischer Eigenschaften zu verändern, wobei noch gewisse Restelastomereigenschaften, insbesondere die Vulkanisierbarkeit verbleiben. Solche Terpolymerisate sind beispielswiese beschrieben in der DE—OS 26 35 402. Diese Verschiebung des Eigenschaftsbildes in Richtung thermoplastischer Eigenschaften, wie sie sich in einem erhöhten Schmelzbereich und in der Abnahme der Löslichkeit in organischen Lösungsmitteln ausdrücken, geht bei den genannten Terpolymerisaten gemäß DE—OS 26 35 402 jedoch einher mit einer zunehmenden Verschlechterung der mechanischen Eigenschaften, insbesondere bei erhöhten Temperaturen, vor allem der Werte für die Zugfestigkeit und die Dehnung. Mit zunehmendem Gehalt an Tetrafluoräthylen (bei vergleichbaren Schmelzindex-Werten) werden solche Terpolymerisate zunehmend brüchig und spröde.

Es wurde nun gefunden, daß sich dieser Nachteil vermeiden läßt, wenn man solchen Terpolymerisaten, die neben Vinylidenfluorid und Hexafluorpropen mindestens 40, vorzugsweise mindestens 54 Gew.-% Tetrafluoräthylen-Einheiten enthalten, als viertes Comonomeres eine kleine Menge eines perfluorierten Äthers hinzufügt.

Die Erfindung betrifft somit ein thermoplastisches Fluorpolymerisat, bestehend aus einpolymerisierten Einheiten von

a) 35 bis 8.5 Gew.-% Vinylidenfluorids,

b) 14 bis 1.5 Gew.-% des Hexafluorpropens,

c) 11 bis 1.0 Gew.-% eines perfluorierten Äthers der Formel

$$R_f—O—CF{=}CF_2$$

worin $R_f$ ein Perfluoralkylrest mit 2 bis 4 C-Atomen ist,

oder der Formel

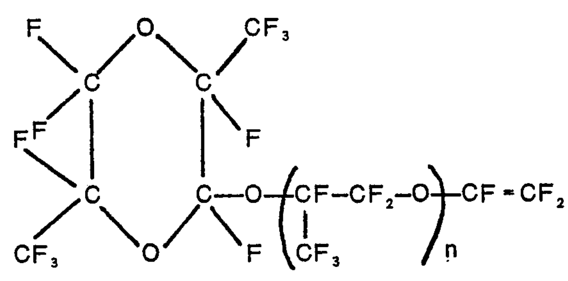

worin n = 0 bis 2, vorzugsweise 0 bis 1 ist, oder der Formel

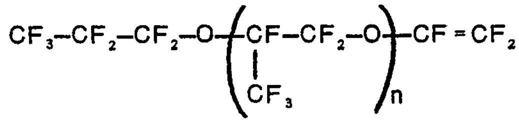

worin n = 1 bis 3, vorzugsweise 1 ist,

oder von Perfluor-(2-methylen-4-methyl-1,3-dioxolan),

und

d) 40 bis 89 Gew.-% des Tetrafluoräthylens.

In einer bevorzugten Ausführungsform die erfindungsgemäßen Quater-Fluorpolymerisate aus einpolymerisierten Einheiten von: a) 32 bis 9 Gew.-% Vinylidenfluorid, b) 8 bis 1.5 Gew.-% Hexafluorpropen, c) 6 bis 1.5 Gew.-% eines perfluorierten Athers (der Ausdruck perfluorierte Äther bezieht sich hier und im folgenden auf die durch die obigen Formeln definierten Verbindungen) und d) 54 bis 88

Gew.-% Tetrafluoräthylen. In einer besonders bevorzugten Ausführungsform bestehen die erfindungsgemäßen Quater-Fluorpolymerisate aus einpolymerisierten Einheiten von: a) 31 bis 11 Gew.-% Vinylidenfluorid, b) 5 bis 3 Gew.-% Hexafluorpropen, c) 4 bis 3 Gew.-% des perfluorierten Äthers und d) 60 bis 83 Gew.-% Tetrafluoräthylen.

Bevorzugt als Komponente c) sind Perfluor(äthylvinyl)äther Perfluor(n-butylvinyl)äther und insbesondere Perfluor(n-propylvinyl)äther.

Die Komponente c) kann auch aus Gemischen von perfluorierten Äthern der oben angegebenen Formeln bestehen.

Die erfindungsgemäßen Quaterpolymerisate, die einen Schmelzindex-Wert im Bereich von 0.1 bis 1500 g/10 min (gemessen bei 300°C und 11 kg Belastung), vorzugsweise von 0.5 bis 700 g/10 min, besitzen, können wie folgt hergestellt werden:

Polymerisiert wird vorzugsweise nach dem Verfahren der Emulsionspolymerisation in wäßriger Phase. Dazu müssen der Flotte Emulgatoren in einer Menge von 0.01 bis 2 Gew.-%, vorzugsweise von 0.03 bis 1 Gew.-%, bezogen auf die Menge der vorgelegten wäßrigen Polymerisationsflotte, zugefügt werden. Im Prinzip sind alle dem Fachmann geläufigen Emulgatoren für die Emulsionspolymerisation von Fluorolefinen einsetzbar. Geeignete Emulgatoren sind die Ammonium- und Alkalisalze von $\omega$-Hydrofluorcarbonsäuren, von Perfluoralkoxypropionsäuren, insbesondere Perfluorpropoxypropionsäure, von Perfluoralkylsulfonsäuren und Perfluoralkylphosphonsäuren, sowie ganz besonders von Perfluorcarbonsäuren mit längeren Perfluoralkylketten, insbesondere solchen mit 6 bis 12 C-Atomen im Perfluoralkylrest. Die vorgenannten Emulgatoren können auch in form ihrer freien Säuren eingesetzt und gegebenenfalls mit Ammoniak neutralisiert werden, wobei durch das Verhältnis von Säure und Ammoniak gleichzeitig der pH-Wert eingestellt werden kann.

Ferner können gegebenenfalls Puffersubstanzen wie die Alkali- und Ammoniumsalze der Oxalsäure, der Phosphorsäuren, der Borsäuren oder der Carbaminsäure in geringen Mengen (ca. 0.05 bis 0.5 Gew.-%)zusammen mit der Flotte vorgelegt werden.

Die Copolymerisation der genannten vier Comonomeren wird in Gegenwart von Radikalbildnern in Gang gesetzt. Als Radikalbildner kommen in Frage entweder eine harte energiereiche Strahlung oder wasserlösliche, radikalbildende Katalysatoren, wie sie in großer Zahl dem Fachmann für die Polymerisation und Mischpolymerisation der Tetrafluoräthylens bekannt sind. Solche Katalysatoren sind insbesondere peroxidische Verbindungen. Nur beispielsweise seien hier genannt, Wasserstoffperoxid, dessen Salze wie Natrium- oder Bariumperoxid, dessen Additionsverbindungen an Borate, Carbonate und Harnstoff und dessen Diacylderivate, wie zum Beispiel Diacetylperoxid, Dipropionylperoxid, Dibutyrylperoxid, Dibenzoylperoxid, Benzoylacetylperoxid, Dibernsteinsäureperoxid, Diglutarsäureperoxid und Dilauroylperoxid. Weiterhin sind zu nennen wasserlösliche Persäuren wie Peressigsäure sowie deren wasserlösliche Salze (insbesondere die Ammonium- Natrium- und Kaliumsalze) oder deren Ester, wie zum Beispiel tert.-Butylperoxyacetat und tert.-Butylperoxypivalat. Es können auch eingesetzt werden die wasserlöslichen Salze, insbesondere die Ammonium-, Kalium- und Natriumsalze, von anderen Persäuren wie Peroxomono- und Peroxodisulfate, Perphosphate und organische Percarbonate. Geeignet sind ferner Perfluoracylperoxide oder $\omega$-Hydrofluoracylperoxide. Eine weitere Klasse von anwendbaren Katalysatoren stellen gewisse wasserlösliche Azoverbindungen dar, wie sie zum Beispiel in den US-Patentschriften 2 471 959, 2 515 628 und 2 520 338 beschrieben werden. Vor allem im niederen Temperaturbereich können als Katalysatoren auch die bekannten und sehr wirksamen Redox-Systeme eingesetzt werden, die bei Temperaturen zwischen 10 und 50°C bereits in ausreichendem Maße Radikale erzeugen. Von dem Fachmann für die Polymerisation von Fluorolefinen geläufigen Redox-Systemen seien hier nur beispielhaft genannt die Kombinationen von Peroxodisulfat und Hydrogensulfit oder Disulfit, Peroxodisulfat und Thiosulfat, sowie Peroxodisulfat und Hydrazin oder Azodicarbonsäureamid (Salze, vorzugsweise in Form der Alkali- und insbesondere der Ammoniumsalze). Ferner kann man sich mit Vorteil der Ammonium-, Alkali- oder Erdalkalisalze der Permangan-, Mangansäure oder manganigen Säure als Katalysatoren bedienen.

Die zugegebene Katalysatormenge liegt zwischen 0.05 und 1 Mol-%, vorzugsweise zwischen 0.1 und 0.7 Mol-%, bezogen auf die Gesamtmolmenge aller Comonomeren. Dabei kann die gesamte Katalysatormenge am Beginn der Reaktion der Polymerisationsflotte zugegeben werden. Im Falle größerer Ansätze kann es jedoch zweckmäßig sein, die Gesamtmenge des Katalysators kontinuierlich im Verlauf der Polymerisation bis zu einem Umsatz von 70 oder 80% zuzuschleusen. Ebenso kann man auch einen Teil der Katalysatormenge am Beginn vorlegen und den Rest einmalig oder in Teilmengen nachschleusen. Die Zugabe von Co-Katalysatoren, also beispielsweise von löslichen Salzen des Eisens, des Kupfers und des Silbers kann von Vorteil sein, insbesondere beim Einsatz von Redox-Systemen als Katalysatoren. Es hängt von der Art des verwendeten Katalysators ab, ob die Copolymerisation der vier Monomeren im sauren oder im alkalischen Bereich gestartet bzw. durchgeführt werden muß. Je nach Art des verwendeten Katalysators sollte daher der pH-Wert der Flotte beim Polymerisationsbeginn zweckmäßigerweise im Bereich 3 bis 10, vorzugsweise 4 bis 9, liegen.

Die Copolymerisation der genannten vier Monomeren kann auch nach dem Verfahren der Suspensionspolymerisation durchgeführt werden. Dazu stellt man den erforderlichen, schwach sauren oder schwach alkalischen pH-Bereich durch die Zugabe geeigneter Puffersubstanzen zur wäßrigen Flotte ein. Puffer für den sauren Bereich, die meist gleichzeitig auch als Fällungsmittel wirken, sind beispielsweise Ammoniumchlorid, Ammoniumdihydrogenphosphat, Borsäure oder Ammoniumoxalat oder auch Gemische solcher Verbindungen. Puffersubstanzen für den alkalischen Bereich sind beispielsweise Borax, Ammoniumcarbonat, Ammoniumhydrogencarbonat, Ammoniumcarbaminat, Ammoniumpentaborat oder auch Ammoniak selbst. Es kann zweckmäßig sein, auch bei der Suspensionspolymerisation eine kleinere Menge an Emulgatoren der oben beschriebenen Art hinzuzufügen, um Verklumpungen und Kesselbeläge zu vermeiden und eine gleichmäßigere Teilchengröße zu erreichen. Die Gewichtsmenge an solchen Emulgatoren liegt hier im allgemeinen unter 150 ppm, vorzugsweise unter 50 ppm, bezogen auf die bei Beginn der Polymerisation vorgelegte wäßrige Flotte.

Die Copolymerisation kann auch in organischen Lösungsmitteln, die keine oder höchstens sehr geringe telogene Aktivität besitzen, durchgeführt werden. Solche Lösungsmittels sind insbesondere perfluorierte und mit Fluor und Chlor perhalogenierte Lösungsmittel, wie $CF_2CL—CFCl_2$, $CF_2Cl_2$, $CF_3Cl$, $CF_2Cl—CF_2Cl$, $CFCl_2CFCl_2$, Perfluorcyclobutan sowie flüssige Oligomere des Tetrafloräthylens oder Hexafluorpropens. Aus den genannten Katalysatoren müssen dazu diejenigen, die im jeweiligen Lösungsmittel ausreichend löslich sind, ausgewählt werden. Es kann auch die beschriebene Emulsionspolymerisation der vier Comonomeren in wäßrigen medien unter Zusatz von Anteilen solcher Lösungsmittel durchgeführt werden.

Zur Herstellung eines verarbeitungsgerechten Bereichs der Schmelzviskosität der herzustellenden Quaterpolymerisate ist die Zugabe von geeigneten Kettenübertragungsmitteln mit regelnder Wirkung zur Polymerisationsflotte sowohl bei der Emulsions- als auch bei der Suspensionspolymerisation in wäßrigen Medien oder in organischen Lösungsmitteln erforderlich. Geeignet sind im Prinzip alle Regler, die eine genügende telogene Aktivität aufweisen, um dem Quaterpolymerisat einen Schmelzindex-Wert von 0.1 bis 1500 g/10 Minuten (300°C, 11 kg Belastung) zu verleihen. Als Kettenübertragungsmittel geeignet sind aliphatische Carbonsäureester, Ketone, Alkohole oder Ätheralkohole, wie zum Beispiel Aceton, Methanol, Äthanol, Isopropanol, Dialkylmalonester (mit Alkylketten bis zu 4 C-Atomen) oder niedere Dialkylglykole wie Diäthylenglykol oder Dipropylenglykol, ferner auch halogenierte Derivate aus diesen Verbindungsgruppen wie Bromessigester oder Brommalonester, Bromaceton sowie Chlor- oder Brommethanol und Chlor- oder Bromäthanol. Es können zur Herstellung der erfindungsgemäßen Quaterpolymerisate aber auch gesättigte aliphatische Halogenkohlenwasserstoffe als regelnde Kettenübertragungsmittel eingesetzt werden, die als Halogene Fluor, Chlor und/oder Brom und gegebenenfalls noch Wasserstoff enthalten. Solchen aliphatischen Halogenkohlenwasserstoffen als Kettenübertragungsmittel ist insbesondere dann der Vorzug zu geben, wenn das herzustellende Quaterpolymerisat einen hohen Anteil an Tetrafluoräthylen enthalten soll (etwa $<70$ Mol-%). Derartige Halogenkohlenwasserstoffe, die als Regler geeignet sind, sind insbesondere solche der Formel $C_nX_{2n+2}$, worin $n = 1$ bis 4, vorzugsweise 1 bis 3 ist und $X = F, Cl, Br, H$ in allen Kombinationen sein kann, jedoch mit der Maßgabe, daß die Zahl der F-Atome im Molekül höchstens $2n + 1$, die Zahl der H-Atome höchstens $2n + 1$ und die Zahl der Br-Atome maximal 4 beträgt. Als Beispiele solcher Halogenkohlenwasserstoffe seien genannt Tetrachloräthan, Trichloräthan, Hexachlorpropan, Tetrafluordibromäthan und Chlordibromtrifluoräthan. Besonders bevorzugt sind Chloroform, Methylenchlorid und Tetrachlorkohlenstoff. Geeignete Regler sind auch Wasserstoff oder wasserstoffhaltige Gase, vor allem geradkettige und verzweigte Alkane mit 1 bis 4 C-Atomen, insbesondere Methan und Äthan, sowie gasförmige Halogenkohlenwasserstoffe. Die Einsatzmenge der genannten, bei Normalbedingungen flüssigen Kettenübertragungsmittel hängt von der Intensität ihrer regelnden Wirkung ab, die dem Fachmann bekannt ist. Sie liegt im Bereich von 0.01 bis 5 Gew.-%, vorzugsweise von 0.05 bis 2 Gew.-%, bezogen auf die Menge der vorgelegten Flotte. Gegebenenfalls können auch Gemischeder genannten flüssigen Kettenübertragungsmittel eingesetzt werden. Gasförmige Kettenübertragungsmittel werden dem Reaktor vorzugsweise über den Gasraum zugeführt, wobei der Partialdruck 0.1 bis 4, vorzugsweise 0.5 bis 2 bar betragen soll. Auch hier ist der Patialdruck des Reglers nach dessen telogener Aktivität zu bemessen. Die notwendige Menge an Regler wird zweckmaßigerweise vor dem Polymerisationsbeginn zugegeben, bei einigen, sich schnell verbrauchenden Reglern kann es jedoch angezeigt sein, eine Teilmenge vorzulegen und den Rest während der Copolymerisation kontinuierlich oder diskontinuierlich nachzuschleusen. Aus der oben gegebenen Definition für Fluorchlorkohlenwasserstoffe als Regler geht hervor, daß solche mit Fluor und Chlor perhalogenierten Kohlenwasserstoffe wegen ihrer schwachen telogenen Aktivität auch die Rolle des weiter oben beschriebenen Lösungsmittels mitübernehmen können. Gegebenenfalls kann, falls die regelnde Wirkung nicht ausreicht, noch eine kleinere Menge eines stärkeren Reglers hinzugefügt werden. Prinzipiell kann das als Comonomeres dienende Hexafluorpropen selbst auch die Rolle eines Lösungsmittels mit regelnder Wirkung übernehmen.

Die für die Quaterpolymerisation erforderlichen vier Monomeren können dem Reaktor über getrennte Leitungen in gasförmigen oder in flüssigem Zustand zugeführt werden. Zweckmäßigerweise werden die niedrig siedenden Comonomeren (Tetrafluoräthylen und Vinylidenfluorid) in gasförmigem Zustand, die unter Polymerisationsbedingungen flüssigen Comonomeren (Hexafluorpropen und der perfluorierte Äther) vermittels Pumpen über Kapillarleitungen dem Reaktor in flüssiger Form zugeführt. Ebenso können auch die gasförmig zugeführten wie auch die flüssig zugeführten Komponenten vor der Zuführung im entsprechenden Molverhältnis abgemischt und als Mischung über eine gemeinsame Leitung eingegeben werden. Schließlich kann man auch alle vier Monomeren in den flüssigen Aggregatszustand überführen, im gewünschten Molverhältnis abmischen und als Vierkomponentengemisch dem

Reaktionsgefäß in flüssiger Form zuführen.

Weitere Varianten des Copolymerisationsverfahrens sind dadurch gegeben, daß man die Copolymerisation mit gleichzeitiger Zufuhr aller Monomeren beginnen kann und diese Zufuhr fortlaufend fortsetzt. Es hat sich jedoch als besonders zweckmäßig erwiesen, einen Teil der Monomeren, und insbesondere die reaktionsträgeren, Hexafluorpropen und perfluorierten Äther, in einer Teilmenge im Reaktionsgefäß vorzulegen, wobei einzelne der vier Monomeren auch in ihrer Gesamtmenge vorgelegt werden können. Insbesondere ist es bevorzugt, den perfluorierten Äther in seiner Gesamtmenge vorzulegen. Die erforderliche Nachschleusung von Monomeren über den Polymerisationsverlauf hinweg hat mit einer Geschwindigkeit zu erfolgen, daß der Polymerisationsdruck im wesentlichen konstant bleibt.

Um eines der nachstehend genannten, vor der Erfindung umfaßten Gewichtsverhältnisse von Tetrafluoräthylen : Vinylidenfluorid im Quaterpolymerisat einzustellen, sind diese beiden Monomeren in etwa in den folgenden Molverhältnissen, insgesamt dem Polymerisationsgefäß zuzuführen:

| Gewichtsprozente im Polymerisat | | Molverhältnis der insgesamt eingeführten Monomeren | |
|---|---|---|---|
| Tetrafluoräthylen | Vinylidenfluorid | Tetrafluoräthylen | Vinylidenfluorid |
| ≧ 85 | 5 | 7 – 8 | 1 |
| 80 | 10 | 5 – 6 | 1 |
| 70 | 20 | 4 – 5 | 1 |
| 60 | 30 | 2 – 3 | 1 |
| ≦ 50 | 35 | 1 – 2 | 1 |

Wird ein Teil des Tetrafluoräthylens und ein Teil des Vinylidenfluorids vor Beginn der Reaktion im Kessel vorgelegt und ein anderer Teil nachgeführt, so kann man etwa folgende Verhältnisse, je nach den gewünschten Gewichtsanteilen im Quaterpolymerisat, einhalten:

| Gewichtsprozente im Polymerisat | | Molverhältnis der Vorgabe | | Molverhältnis der Nachschleusung | |
|---|---|---|---|---|---|
| Tetrafluoräthylen | Vinylidenfluorid | Tetrafluoräthylen | Vinylidenfluorid | Tetrafluoräthylen | Vinylidenfluorid |
| ≧ 85 | 5 | 4 – 5 | 1 | 8 – 9 | 1 |
| 80 | 10 | 3 | 1 | 7 | 1 |
| 70 | 20 | 2 | 1 | 5 – 6 | 1 |
| 60 | 30 | 1 | 1 | 3 | 1 |
| ≦ 50 | 35 | 1 | 1 | 2.5 – 2 | 1 |

Die weiteren Comonomeren, nämlich Hexafluorpropen und der perfluorierte Äther, sind bei einer Copolymerisation im wäßrigen Medium wegen ihrer geringen Löslichkeit und ihrer geringeren Reaktivität im Überschuß einzusetzen. Bezogen auf die jeweils gewünschte Einbaumenge in das Quaterpolymerisat sollte der Überschuß an Hexafluorpropen zweckmäßigerweise etwa die 20- bis 30fache Menge, an perfluoriertem Äther etwa die 2- bis 4fache, vorzugsweise etwa die 3fache Menge, betragen. Bei einer Copolymerisation in einem der oben genannten Lösungsmittel oder bei Zusatz eines solchen Lösungsmittels zur wäßrigen Phase kann dieser Überschuß an den genannten beiden Comonomeren wegen deren erhöhten Löslichkeit erheblich geringer gewählt werden. Auch im wäßrigen Medium kann die Einbaurate des Hexafluorpropens und des perfluorierten Äthers durch Zugabe von Netzmitteln und Variation der Polymerisationsbedingungen hinsichtlich Druck, Temperatur und Veränderung des Rühreffekts dahingehend verändert werden, daß man gegebenenfalls mit einem geringeren Überschuß dieser Comonomeren auskommt.

Die Copolymerisation wird im wäßrigen Medium bei Temperaturen zwischen +5°C und +120°C, vorzugsweise zwischen +20°C und +80°C; in organischer Lösungsmittelphase bei Temperaturen zwischen −20°C und +100°C, vorzugsweise zwischen 0°C und +80°C durchgeführt. Der bei der Quaterpolymerisation einzustellende und in etwa beizubehaltende Druck liegt für das Verfahren in wäßriger Phase zwischen 5 und 60 bar, vorzugsweise zwischen 12 und 25 bar, für das Verfahren in organischen Lösungsmitteln zwischen 3 und 40 bar, vorzugsweise zwischen 5 und 15 bar.

Nach dem genannten Verfahren lassen sich auch Quaterpolymerisate herstellen, die einen Anteil an Tetrafluoräthylen-Einheiten von <40 Gew.-% besitzen, beispielsweise bis herunter zu 20 Gew.-%, ebenso solche, die Anteile des perfluorierten Äthers von >11 Gew.-% besitzen. Derartige Quaterpolymerisate zeigen die bekannten elastomeren Eigenschaften.

Die Polymerisationsflotte, die das suspendierte bzw. dispersierte Quaterpolymerisat enthält, wird nach Beendigung der Polymerisation abgelassen und in üblicher Weise aufgearbeitet. Im Falle des Suspensionspolymerisats werden die suspendierten körnigen Teilchen durch ein Sieb oder ein Filter von der Flotte abgetrennt, gewaschen und je nach der geplanten Verwendung zerkleinert oder angranuliert. Sodann wird das Produkt getrocknet, getempert und gegebenenfalls schmelzgranuliert.

Die nach dem Verfahren der Emulsionspolymerisation erhaltenen Dispersionen der erfindungsgemäßen Quaterpolymerisate besitzen eine hervorragende Stabilität und zeigen ein günstiges Absetzverhalten. Sie können entweder in Form von Dispersionen weiterverarbeitet oder durch Hinzufügen von Koagulationsmitteln oder auch durch Rühren zu einem festen Pulver koaguliert, von der Flotte abgetrennt und in üblicher Weise aufgearbeitet werden. Sie können auch mit nicht-ionogenen, oberflächenaktiven Dispergatoren zusätzlich nachstabilisiert werden, insbesondere mit oxäthylierten Alkylphenolen oder Polyoxalkylaten und in dieser Form nach bekannten Verfahren auf größere Feststoffkonzentrationen bis zu 60 Gew.-% aufkonzentriert und so weiterverarbeitet werden.

Die erfindungsgemäßen Quaterpolymerisate sind in der Schmelze extrudierbar, in organischen Lösungsmitteln unlöslich oder weitgehend unlöslich und in solchen Lösungsmitteln auch praktisch nicht quellbar. Sie unterscheiden sich darin scharf von den bereits bekannten elastomeren Quaterpolymerisaten bestehend aus den gleichen Monomeren. Sie besitzen gegenüber Terpolymerisaten aus Tetrafluoräthylen, Hexafluorpropen und Vinylidenfluorid mit relativ hohen Tetrafluoräthylen-Anteilen überraschenderweise bei vergleichbarem Tetrafluoräthylen-Gehalt verbesserte mechanische Eigenschaften (siehe Tabelle 1, Beispiel 1 bis 3 und Vergleichsversuch) wie Reißfestigkeit, Streckspannung und Bruchdehnung, wobei unerwarteterweise dieser Unterschied bei erhöhten Temperaturen sich auf ein Vielfaches vergrößert. Sie besitzen ferner eine erhöhte Transparenz, eine verbesserte Kugeldruckhärte und eine höhere Dimensionsstabilität. Diejenigen der erfindungsgemäßen Quaterpolymerisate, deren Tetrafluoräthylen-Anteil im unteren Teil des erfindungsgemäßen Bereichs der Zusammensetzung liegt (etwa <65 Gew.-%) und die einen mittleren Schmelzindex-Wert (in bezug auf den oben definierten Bereich von 0.1 bis 1500 g/10 min) besitzen, sind insbesondere für Beschichtungszwecke geeignet, speziell für metallische Substrate. Solche mit diesen erfindungsgemäßen Quaterpolymerisaten erzielten Beschichtungen zeigen insbesondere eine ausgezeichnete Haftung am Substrat, eine hervorragende Transparenz, eine äußerst glatte Oberfläche sowie praktisch keine Rißanfälligkeit beim Beschichtungsvorgang, wodurch auf einfache Weise porenfreie Schichten bis zu mehreren Millimetern Dicke aufgebracht werden können.

Diejenigen erfindungsgemäßen Quaterpolymerisate mit relativ hohem Tetrafluoräthylen-Gehalt (etwa >60 Gew.-%) und einem niedrigen Schmelzindex-Wert (in bezug auf den oben definierten Bereich) eignen sich besonders zur Herstellung von Schälfolien, solche mit hohem Tetrafluoräthylen-Gehalt und mittlerem bis hohem Schmelzindex-Wert werden verarbeitet zu flexiblen, chemikalien- und temperaturbeständigen Kabelisolationen von hervorragender Durchschlagsfestigkeit sowie zur Herstellung von Formkörpern nach üblichen Verarbeitungsmethoden für Thermoplaste wie Spritzgießen, Strang- und Blasextrudieren, Kalandrieren usw. Folien aus diesen Materialien können mit Vorteil tiefgezogen oder gereckt werden.

Diejenigen erfindungsgemäßen Quaterpolymerisate, die einen Schmelzindex-Wert im oberen Teil des oben definierten Bereichts besitzen, werden zweckmäßigerweise nach der Formung mit einem üblichen Vernetzungsmittel gehärtet.

Die Erfindung wird durch folgende Beispiele erläutert:

Beispiel 1

Die Polymerisation wird in einem emaillierten Rührautoklaven mit einem Leervolumen von 48 Liter durchgeführt, der mit einem Impeller-Rührer, einem Stromstörer sowie mit Vorrichtungen zur Zufuhr und Dosierung von gasförmigen und flüssigen Monomeren oder Zusatzstoffen und mit Vorrichtungen zur Messung und Konstanthaltung von Druck und Temperatur versehen ist. Es wurden zunächst 25 Liter voll entsalztes Wasser vorgelegt, worin 25 g Perfluoroctansäure, 8 ml Ammoniak (18 gew.-%ig in Wasser) und 30 g Ammoniumhydrogenoxalat gelöst werden. Das Polymerisationsgefäß wird dann mit Stickstoff und anschließend mit Tetrafluoräthylen gespült. Sodann werden dem Gefäß nacheinander 60 ml Chloroform, 250 g Perfluor(n-propylvinyl)äther (= 0.94 Mol) und 600 g Hexafluorpropen (= 4 Mol) zugeführt. Durch die weitere Zuführung von 900 g Tetrafluoräthylen (= 9 Mol) und 192 g Vinylidenfluorid (= 3 Mol) baut sich im Kessel ein Druck von 17 bar auf. Die Temperatur der wäßrigen Flotte wird auf 30°C eingestellt und beibehalten. Sodann wird die Polymerisation gestartet, indem eine 1.5 gew.-%ige wäßrige $KMnO_4$-Lösung mit einer Geschwindigkeit von 14 ml pro Minute zudosiert wird. Die Rührung wird auf 220 UpM eingestellt. Sobald die Polymerisation in Gang gekommen ist, führt man dem Polymerisationsgefäß simultan gasförmiges Tetrafluoräthylen, flüssiges Hexafluorpropen und gasförmiges Vinylidenfluorid zu. Nach 71 Minuten wird die Polymerisation gestoppt. Zu diesem Zeitpunkt waren neben der vorgelegten Menge an Monomeren weitere 2800 g Tetrafluoräthylen (= 28 Mol), 3600 g Hexafluorpropen (= 24 Mol) und 256 g Vinylidenfluorid (= 4 Mol) zugeführt worden. Die nicht umgesetzten Monomeren werden zurückgeführt, das Polymerisationsgefäß wird über das Bodenventil entleert. Die gebildete milchig-weiße Dispersion (29,5 kg) enthält 10.1 Gew.-% Feststoff. Dies entspricht einer Raumzeitausbeute von 101 g/l·h.

Die Dispersion wird in einem Glasgefäß von 50 Liter Inhalt mit konzentriertier HCl angesäuert und mit einem Propellerrührer (120 mm Blattdurchmesser) bei 900 UpM ausgerührt. Nach Ausfällung des Feststoffs wird die Polymerisationsflotte abgetrennt und das gebildete Quaterpolymerisat mehrmals mit voll entsalztem Wasser gewaschen und anschließend 20 Stunden bei 150°C getrocknet. Aufgrund der durchgeführten Elementaranalyse (C, H, F) und der Auswertung der IR-Spektren, besitzt das gebildete Quaterpolymerisat folgende Zusammensetzung:

81.9 Gew.-% Tetrafluoräthylen,
11.3 Gew.-% Vinylidenfluorid,
4.3 Gew.-% Hexafluorpropen,
2.5 Gew.-% Perfluor(n-propylvinyl)äther.

Aus der Differential-Thermoanalyse ergibt sich ein Schmelzbereich zwischen 238°C und 298°C mit einem Maximum (Peak) bei 273°C. Der Schmelzindex-Wert (gemessen bei 11 kg Belastung und 300°C) beträgt 42 g/10 min. Die weiteren Eigenschaften sind in Tabelle 1 enthalten.

Beispiel 2

Es wird eine Polymerisation analog der in Beispiel 1 beschriebenen durchgeführt, wobei die gleichen Monomeren und Zusatzstoffe in gleichen Mengen, wie dort angegeben, vorgelegt werden. Lediglich die Menge des Reglers (Chloroform) wird auf 50 ml vermindert. Nach Beendigung der Polymerisation nach 63 Minuten sind dem Polymerisationskessel zusätzlich zu den vorgelegten Mengen weitere 3000 g Tetrafluoräthylen (=30 Mol), 3750 g Hexafluorpropen (=25 Mol) und 384 g Vinylidenfluorid (=6 Mol) zugeführt worden. Es werden 30 kg Dispersion, enthaltend 3.2 kg Feststoff, erhalten, was einer mittleren Raumzeitausbeute von 122 g/l·h entspricht. Das aus der Dispersion durch Koagulation gefällte Quaterpolymerisat enthält gemäß Elementaranalyse und IR-Spektrum

68.7 Gew.-% Tetrafluoräthylen
22.8 Gew.-% Vinylidenfluorid,
5.0 Gew.-% Hexafluorpropen,
3.5 Gew.-% Perfluor(n-propylvinyl)äther.

Nach der Differential-Thermoanalyse ergibt sicht ein Schmelzbereich zwischen 191°C und 282°C mit einem Maximum (Peak) von 243°C. Der Schmelzindex-Wert beträgt 40 g/10 min (gemessen bei 11 kg Belastung und 300°C). Die weiteren Eigenschaften sind der Tabelle 1 zu entnehmen.

Beispiel 3

Es wird eine Polymerisation analog Beispiel 1 durchgeführt, wobei zunächst die gleiche Menge an Wasser und Zusatzstoffen (Perfluoroctansäure, Ammoniak, Ammoniumhydrogenoxalat) vorgelegt wird, sodann werden 10 g Diäthylmalonester als Regler sowie 250 g Perfluor(n-propylvinyl)äther (= 0.94 Mol) 600 g Hexafluorpropen (=4 Mol), 600 g Tetrafluoräthylen (=6 Mol) und 384 g Vinylidenfluorid (=6 Mol) zudosiert. Die Polymerisation wird, wie in Beispiel 1 beschrieben, gestartet und ist nach 50 min Laufzeit beendet. In dieser Zeit werden weitere 3000 g Tetrafluoräthylen (=30 Mol), 3750 g Hexafluorpropen (= 25 Mol) und 640 g Vinylidenfluorid (= 10 Mol) zugeführt.

Es werden 29.5 kg Dispersion erhalten, diese Dispersion besitzt einen Feststoffgehalt von 10 Gew.-%, was einer mittleren Raumzeitausbeute von 137 g/l·h entspricht.

Gemäß Elementaranalyse und IR-Spektrum besitzt das erhaltene Quaterpolymerisat folgende Zusammensetzung:

62.0 Gew.-% Tetrafluoräthylen,

30.4 Gew.-% Vinylidenfluorid,
4.6 Gew.-% Hexafluorpropen,
3.0 Gew.-% Perfluor(n-propylvinyl)äther.

Nach der Differential-Thermoanalyse wird ein Schmelzbereich von 144°C bis 207°C mit einem Maximum (Peak) bei 173°C erhalten. Der Schmelzindex-Wert beträgt 11 g/10 min (bei 67 kg Belastung und 300°C). Die weiteren Eigenschaften sind in Tabelle 1 verzeichnet.

Vergleichsbeispiel

Es wird eine Polymerisation durchgeführt, wie sie in Beispiel 2 beschrieben ist, jedoch ohne Zugabe von Perfluorpropylperfluorvinyläther. Unter den in Beispiel 2 angegebenen Bedingungen erhält man nach einer Laufzeit von 69 min 29.3 kg einer Dispersion mit einem Feststoffgehalt von 3.1 kg, die, wie in Beispiel 1 angegeben, aufgearbeitet wird.

Das erhaltene Terpolymerisat besitzt gemäß Elementaranalyse und IR-Spektrum folgende Zusammensetzung:
71.4 Gew.-% Tetrafluoräthylen
23.6 Gew.-% Vinylidenfluorid,
5.0 Gew.-% Hexafluorpropen.

Gemäß Differential-Thermoanalyse erstreckt sich der Schmelzbereich dieses Terpolymeren von 187°C bis 286°C mit einem Maximum (Peak) bei 251°C. Der Schmelzindex-Wert wird bestimmt zu 55 g/ 10 min (gemessen bei 11 kg Belastung und 300°C). Die weiteren Eigenschaften dieses Terpolymerisats, insbesondere im Vergleich mit den in Beispiel 1 bis 3 erhaltenen Quaterpolymerisaten, sind ersichtlich aus Tabelle 1.

TABELLE 1

| | Einheit | Beispiel 1 | Beispiel 2 | Beispiel 3 | Vergleichs-beispiel |
|---|---|---|---|---|---|
| Zusammensetzung (Mol–%) | TFÄ **) | 79.2 | 63.0 | 54.5 | 64.0 |
| | VDF | 17.1 | 32.7 | 41.8 | 33.0 |
| | HFP | 2.8 | 3.1 | 2.7 | 3.0 |
| | PPVÄ | 0.9 | 1.2 | 1.0 | – |
| Zusammensetzung (Gew.–%) | TFÄ **) | 81.9 | 68.7 | 62.0 | 71.4 |
| | VDF | 11.3 | 22.8 | 30.4 | 23.6 |
| | HFP | 4.3 | 5.0 | 4.6 | 5.0 |
| | PPVÄ | 2.5 | 3.5 | 3.0 | – |
| Dichte | $g/cm^3$ | 2.037 | nicht best. | 1.961 | 2.080 |
| Schmelzbereich (°C) | Beginn | 238 | 191 | 144 | 187 |
| | Mitte | 273 | 243 | 173 | 251 |
| | Ende | 298 | 282 | 207 | 286 |
| Reissfestigkeit bei 23 °C | $N/mm^2$ | 22.3 | 19.5 | 23.5 | 10.8 |
| Reissfestigkeit bei 160 °C | $N/mm^2$ | 2.6 | 4.0 | 0.3 | 1.1 |
| Reissfestigkeit nach Belastung (100 Std., 200 °C) | $N/mm^2$ | 14.3 | 16.6 | – *) | 8.1 |
| Streckspannung bei 23 °C | $N/mm^2$ | 12.7 | 9.4 | 8.9 | 11.9 |
| Streckspannung bei 160 °C | $N/mm^2$ | 2.5 | 3.0 | 0.2 | 1.9 |
| Streckspannung nach Belastung (100 Std., 200 °C) | $N/mm^2$ | 11.3 | 13.5 | – *) | 8.1 |
| Bruchdehnung bei 23 °C Band (Platte) | % | 595 | 620 (797) | 615 | 550 |
| Bruchdehnung bei 160 °C Band (Platte) | % | 395 | 500 (642) | 140 | 10 |
| Bruchdehnung nach Belastung (100 Std., 200°C) | % | 505 | 515 | – *) | 15 |

*) konnte wegen des unterhalb der Testtemperatur liegenden Schmelzpunktes nicht bestimmt werden
**) TFÄ = Tetrafluoräthylen, VDF = Vinylidenfluorid, HFP = Hexafluorpropen, PPVÄ = Perfluor(n-propylvinyl)äther

Zur Ermittlung der in der Beschriebung, in den Beispielen und in Tabelle 1 angegebenen Eigenschaftswerte wurden folgende *Meßmethoden* eingesetzt:

a) Die *Bestimmung des Schmelzbereichsbeginns, der Schmelzbereichsmitte bzw. des Maximums (Peak) sowie des Schmelzbereichsendes* und ferner die Fixierung des Beginns der thermischen Zersetzung erfolgt in einem Differential-Thermoanalysengerät der Firma Linseis (Typ L 70) gegen Indium als Eichsubstanz in einer $N_2$-Atmosphäre bei einer Aufheizgeschwindigkeit von 10 °C/min.

b) Die *Reißfestigkeit, Streckspannung und Bruchdehnung* werden unter Zugrundelegung der ASTM-Norm D—1708—66 mit Zugdehnungsmeßgeräten der Firma Zwick bzw. der Firma Instron bestimmt. Gemessen wird mit einer Vorschubgeschwindigkeit von 50 mm/min. Die Prüfkörper werden gemäß oder in Anlehnung an die ASTM-Norm D—638—67 T aus druckgesinterten Platten von 2 mm Dicke oder aus extrudierten Bändern von 15 mm Breite und 1 mm Dicke ausgestanzt.

c) Zur *Bestimmung des Schmelzindex-Wertes bzw. der Schmelzviskosität* wird ein Prüfgerät nach ASTM-Norm D—1238—65 T (Gerät der Firma Göttfert) benutzt, bei dem jedoch der Aufschmelzzylinder, Kolben und die Austrittsdüse aus einem korrosionsbeständigen Material angefertigt sind. Die Austrittsöffnung der 8 mm langen Düse hat einen Durchmesser von 2.0955 mm. Der Durchmesser des Zylinders beträgt 0.95 cm. Im Zylinder wird eine bestimmte Menge Polymerisat bei einer konstanten Temperatur von 300°C aufgeschmolzen und zum Ausgleich von Temperaturunterschieden 10 Minuten sich selbst überlassen. Im Anschluß daran wird die Schmelze mit einer Kolbenbelastung von 11 kg durch die Austrittsöffnung der Düse extrudiert. Der Schmelzindex-Wert ("melt flowing index" = MFI-Wert $i_{11}$, 300°C) ist definiert durch die innerhalb von 10 Minuten ausfließende Substanzmenge, angegeben in Gramm.

d) Die Zusammensetzung der erfindungsgemäßen Quaterpolymerisate wird bestimmt durch eine Kombination von Elementaranalyse und einem mit hoher Auflösung gefahrenen IR-Spektrum. Zunächst wird der Wasserstoffgehalt durch Elementaranalyse ermittelt, daraus ergibt sich der Gehalt an Vinylidenfluorid im Quaterpolymerisat nach der Formel

$$\frac{(\text{Gew.-\% } H_2) \cdot 100}{3.125} = \text{Gehalt an Vinylidenfluorid in Gew.-\%}$$

Sodann werden von den aus der Elementaranalyse erhaltenen und gemittelten Werten für den Fluor- und den Kohlenstoff-Gehalt diejenigen Teile abgezogen, die dem Anteil an Vinylidenfluorid entsprechen.

Ferner wird der Gehalt an Hexafluorpropen und perfluoriertem Äther bestimmt aus den Infrarot-Spektren, gemessen an 25 $\mu$m dicken Preßfolien auf dem IR-Spektrometer Perkin-Elmer 521. Man erhält den Gehalt an diesem Äther direkt in Gew.-%, wenn man die Nettoabsorption der für den eingesetzten perfluorierten Äther charakteristischen Bande zu einer Bezugsbande bei 2353 $cm^{-1}$ in Verhältnis setzt und mit einem auf das jeweilige Molgewicht des Äthers abgestimmten Faktor multipliziert. Für den Perfluor(n-propylvinyl)äther liegt diese charakteristische Bande bei $993^{-1}$ und der Multiplikationsfaktor beträgt 0.95. Analog wird der Hexafluorpropen-Gehalt bestimmt: Man bildet auch hier das Nettoabsorptionsverhältnis der charakteristischen Hexfluorpropen-Bande (983 $cm^{-1}$) und der Bezugsbande (2353 $cm^{-1}$) und multipliziert in diesem Fall mit 4.5, was den Hexafluorpropen-Anteil in Gew.-% ergibt. Für die im erfindungsgemäßen Verfahren eingesetzten perfluorierten Äther liegt die charakteristische Bande des Äthers so nahe an der Hexafluorpropen-Bande, daß beträchtliche Überlappung eintritt und die eine oder die andere der beiden Banden im IR-Spektrum nur als Schulter erscheint. Um auch in solchen Fällen zu einer Gehaltsbestimmung zu kommen, wurden die Spektren einer Reihe von Mischungen von Bipolymeren aufgenommen. Es wurden zu diesem Zweck aus einem Tetrafluoräthylen-Hexafluorpropen-Copolymerisat (Hexafluorpropen-Gehalt 4.7 Gew.-%; bestimmt wie oben angegeben) und einem Tetrafluoräthylen-Perfluor(n-propylvinyl)äther-Copolymerisat (Perfluor-(n-propylvinyl)äther-Gehalt 2.28 Gew.-%, bestimmt wie oben angegeben) Mischungen in einer Reihe verschiedener Zusammensetzungen hergestellt. Von Preßfolien dieser Mischungen wurden, wie oben angegeben, die IR-Spektren aufgenommen und ausgewertet, woraus Eichkurven für die genaue Auswertung der Terpolymerisat-Spektren erhalten wurden. Zieht man nun noch die für die so errechneten Hexafluorpropen- und Perfluor(n-propylvinyl)äther-Anteile in Anrechnung zu bringenden Fluor- und Kohlenstoff-Gehalt vom Ergebnis der Elementaranalyse ab, so verbleiben die den Anteil von Tetrafluoräthylen anzeigenden Fluor- und Kohlenstoffgehalte, woraus sich der Gehalt an Tetrafluoräthylen im Quaterpolymerisat errechnen läßt.

**Patentansprüche**

1. Thermoplastische Fluorpolymerisate, enthaltend einpolymerisierte Einheiten des Vinylidenfluorids, des Hexafluorpropens und des Tetrafluoräthylens, dadurch gekennzeichnet, daß sie einpolymerisierten Einheiten von

a) 35 bis 8.5 Gew.-% Vinylidenfluorid,
b) 14 bis 1.5 Gew.-% Hexafluorpropen,
c) 11 bis 1.0 Gew.-% eines perfluorierten Äthers der Formel

$$R_f—O—CF=CF_2$$

worin $R_f$ ein Perfluoralkylrest mit 2 bis 4 C-Atomen ist, oder der Formel

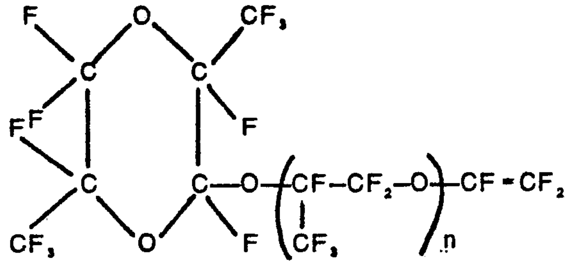

worin n = 0 bis 2, vorzugsweise 0 bis 1 ist, oder der Formel

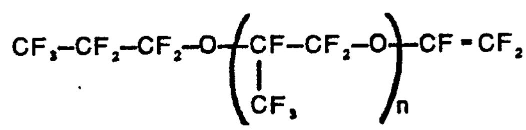

worin n = 1 bis 3, vorzugsweise 1 ist,
oder von Perfluor-(2-methylen-4-methyl-1.3-dioxolan),
und

d) 40 bis 89 Gew.-% Tetrafluoräthylen bestehen und daß sie einen Schmelzindex-Wert im Bereich von 0.1 bis 1500 g/10 min, gemessen bei 300°C und 11 kg Belastung, besitzen.

2. Fluorpolymerisate nach Anspruch 1, gekennzeichnet durch einen Anteil der einpolymerisierten Einheiten von
a)=32 bis 9 Gew.-%,
b)=8 bis 1.5 Gew.-%,
c)=6 bis 1.5 Gew.-%
und
d)=54 bis 88 Gew.-%.

3. Fluorpolymerisate nach Anspruch 1 und 2, dadurch gekennzeichnet, daß der perfluorierte Äther der Komponente c) der Perfluor-(n-propylvinyl)äther ist.

## Claims

1. Thermoplastic fluoropolymers containing polymerised units of vinylidene fluoride, hexafluoropropene and tetrafluoroethylene, characterised by having a content of polymerised units of
a) from 35 to 8.5 percent by weight of vinylidene fluoride,
b) from 14 to 1.5 percent by weight of hexafluoropropene,
c) from 11 to 1.0 percent by weight of a perfluorinated ether of the formulae $R_f—O—CF=CF_2$, wherein $R_f$ is a perfluoroalkyl group of from 2 to 4 C atoms; or

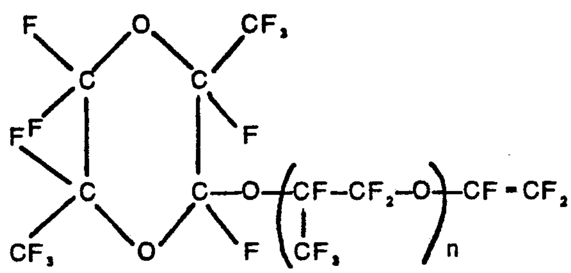

wherein *n* is an integer of from zero to 2, preferably from zero to 1; or

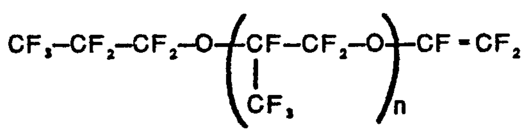

wherein *n* is an integer of from 1 to 3, preferably 1; or perfluoro-(2-methylene-4-methyl-1,3-dioxolan), or mixtures thereof, and

d) from 40 to 98 percent by weight of tetrafluoroethylene; and having a melt flow index ranging from 0.1 to 1500 g/10 min, measured at 300°C at a load of 11 kg.

2. Fluoropolymers according to claim 1, characterised in that the content of polymerised units is

a) from 32 to 9% by weight,
b) from 8 to 1.5% by weight,
c) from 6 to 1.5% by weight, and
d) from 54 to 88% by weight.

3. Thermoplastic fluoro-copolymer as claimed in claims 1, or 2, characterised in that the perfluorinated ether of component c) is perfluoro(n-propylvinyl) ether.

**Revendications**

1. Fluoropolymères thermoplastiques contenant, incorporés par polymérisation, des motifs de fluorure de vinylidène, d'hexafluoropropène et de tétrafluoréthylène, fluoropolymères caractérisés en ce qu'ils sont constitués de motifs copolymérisés comprenant:

a) de 35 à 8,5% en poids de fluorure de vinylidène,
b) der 14 à 1,5% en poids d'hexafluoropropène,
c) de 11 à 1,0% en poids d'un éther perfluoré répondant à la formule: $R_f—O—CF=CF_2$ dans laquelle $R_f$ représente un radical perfluoroalkyle contenant de 2 à 4 atomes de carbone ou à la formule

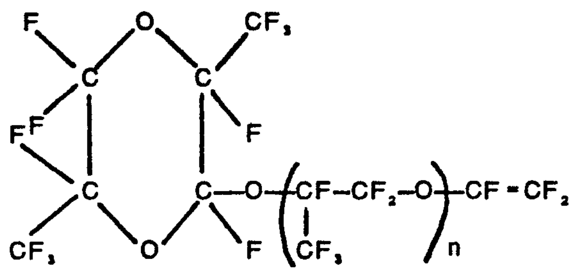

dans laquelle n est un nombre de 0 à 2, de préférence de 0 à 1, ou à la formule

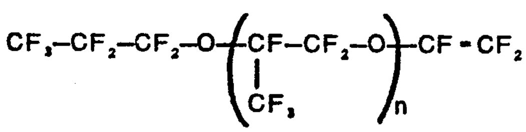

dans laquelle n est un nombre de 1 à 3, de préférence 1, ou de perfluoro-(méthylène-2-méthyl-4 dioxolanne-1,3), et

d) de 40 à 89% en poids de tétrafluoréthylène, et en ce qu'ils ont un indice de fusion situé dans l'intervalle allant de 0,1 à 1500 g/10 minutes, mesuré à 300°C et pour une charge de 11 kg.

2. Fluoropolymères selon la revendication 1, caractérisés en ce qu'ils contiennent comme motifs copolymérisés:

a) de 32 à 9% en poids de fluorure de vinylidène,
b) de 8 à 1,5% en poids d'hexafluoropropène,
c) de 6 à 1,5% en poids d'un éther perfluoré, et
d) de 54 à 88% en poids de tétrafluoréthylène.

3. Fluoropolymères selon l'une ou l'autre des revendications 1 et 2, caractérisés en ce que l'éther perfluoré du composant c) est l'éther perfluoropropylperfluorovinylique.